# DEMANDE DE BREVET EUROPEEN

(11) **EP 0 963 809 A2**
(43) Date de publication de la demande: **15.12.1999**
(21) Numéro de dépôt: 98500277.3
(22) Date de dépôt: 16.12.1998
(51) Int. Cl.: B23Q 11/08

(54) **Dispositif pour la synchronisation du déplacement de différents modules téléscopiques**

(30) Priorité: 12.05.1998 ES 9800994
(71) Demandeur: IRUDEX S.A., 20829 Itziar-deba (Guipuzcoa) (ES)
(72) Inventeur: Perez Ortuondo, José Angel, 20820 Deba (Guipuzcoa) (ES)
(74) Mandataire: Urizar Anasagasti, Jesus Maria

(57) **Abrégé**

Dispositif pour la synchronisation du déplacement de différents modules télescopiques, de préférence d'unités de recouvrement (1) d'un organe vital d'une machine en évitant le dépôt de particules et de liquides sur des parties pouvant se boucher, qui comprend une série de leviers (2) et (3), montés en 'X', dont le point de rotation central (5) est fixé sur chacune des unités télescopiques intermédiaires (1) et dont les extrémités (4) s'accouplent à un autre jeu de leviers en 'X' équivalent au précédent et aux unités respectives (1) situées à l'avant et à l'arrière de celui mentionné précédemment, ces points d'union (4) constituant des cames qui se déplacent longitudinalement le long de fenêtres (5) définies latéralement, de sorte que l'ensemble des unités (1), lors de leur déplacement télescopique, demeurent synchronisées et se déplacent à l'unisson.

## Description

Dispositif pour la synchronisation du déplacement de différents modules télescopiques.

La présente invention traite d'un dispositif qui permet de synchroniser le mouvement qu'effectuent plusieurs unités de recouvrement d'un organe vital d'une machine en évitant le dépôt de particules ou de liquides sur des parties pouvant se boucher.

Ces unités de recouvrement se déplacent en un mouvement télescopique de déploiement et repliement en fonction de l'actionnement de la machine elle-même ou d'un quelconque de ses éléments; le mouvement des différentes unités est effectué moyennant des moteurs, ou par des cylindres d'actionnement hydraulique ou pneumatique.

On ne connaît aucun dispositif résolvant ces problèmes, raison pour laquelle on en a conçu un nouveau permettant son application sur un axe quelconque de la machine, à des vitesses de déplacement de 120 m/minute et des accélérations de 10 m/s.

Ce dispositif comprend une série de deux leviers montés en 'X', dont le point de rotation central est fixé sur une des unités télescopiques intermédiaires, s'accouplant par ses extrémités à un autre jeu de leviers équivalent au précédent et aux unités respectives situées à l'avant et à l'arrière de celui mentionné précédemment. Les points d'union entre les jeux de leviers en 'X' successifs sont constitués par des cames qui se déplacent longitudinalement le long de fenêtres définies latéralement, de sorte que l'ensemble des unités lors de leur déplacement télescopique demeurent synchronisées et se déplacent à l'unisson, tant à leur déploiement qu'à leur repliement, grâce à la liaison établie par les jeux successifs de leviers qui les lient.

Les fenêtres latérales dans lesquelles se déplacent les points d'articulation de deux jeux de leviers consécutifs, sont définies par des pièces complémentaires fixées latéralement dans l'unité télescopique correspondante et présentent une longueur précalculée qui détermine les positions extrêmes, le déploiement maximum et minimum entre unités télescopiques.

Les différentes unités télescopiques présentent à l'intérieur, des roulements latéraux qui agissent sur les guides de la machine correspondante, permettant un déplacement télescopique à grande vitesse.

L'unité située en premier lieu, qui cache les unités télescopiques quand elles se replient et est inamovible, présente des jeux de leviers correspondants de plus petite taille que les précédents qui s'articulent en un point central et à l'extrémité avec le premier jeu de leviers afin de synchroniser de même le déplacement de la deuxième unité télescopique.

L'objet de la présente invention sera mieux compris à l'aide de la description suivante effectuée sur la base d'un exemple pratique de réalisation; cette description est réalisée en s'appuyant sur les dessins des plans annexés, sur lesquels :

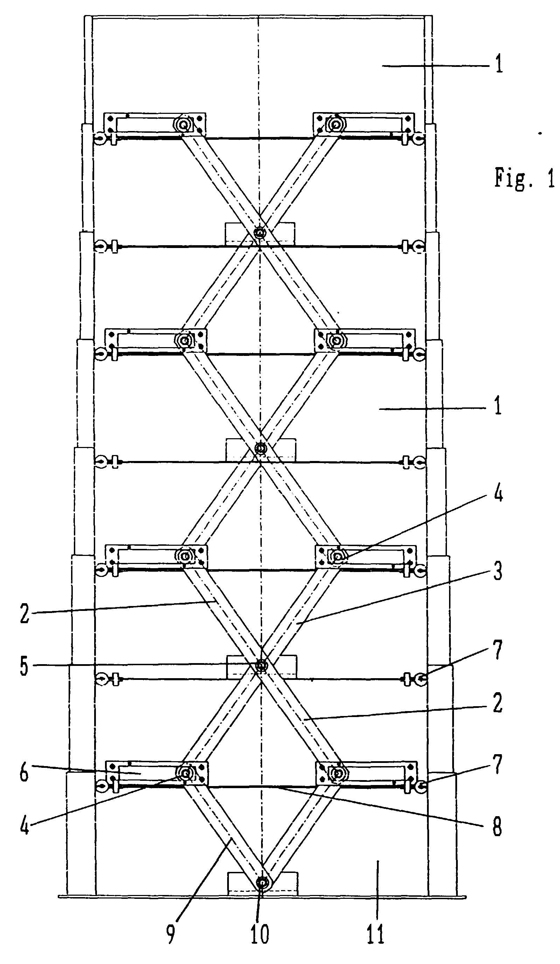

La Figure 1 représente une vue intérieure d'un dispositif pour synchroniser le déplacement de plusieurs unités télescopiques (1), en position dépliée.

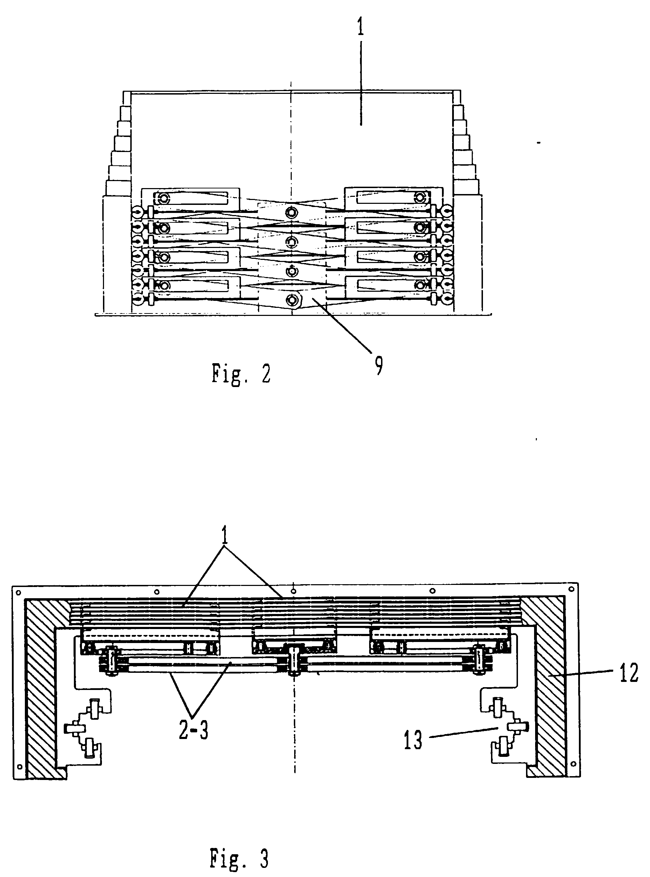

La Figure 2 correspond à une vue équivalente à la précédente quand le dispositif est replié ou recueilli.
La Figure 3 montre une section transversale de la zone de la machine (12) que l'on prétend recouvrir avec les unités (1).

Certaines parties d'une machine quelconque (12), comme peuvent l'être des guides ou broches (13), en fonctionnement habituel, peuvent se remplir de particules métalliques ou non métalliques, de liquides réfrigérants ou autres substances qui peuvent même rendre impossible leur fonctionnement; pour cela, il est nécessaire d'employer des éléments de recouvrement de ces organes vitaux moyennant des unités (1) qui se déplacent télescopiquement sur la zone (13) à protéger en fonction du fonctionnement de la machine : parfois ce mouvement de déploiement et repliement des unités de recouvrement doit être effectué à grande vitesse selon les besoins de mouvement de la machine.

Le dispositif représenté sur les figures effectue cette opération en synchronisant le mouvement des différentes unités (1); il comprend pour cela une série de leviers (2) et (3), montés en 'X', dont le point de rotation central (5) est fixé sur une des unités télescopiques intermédiaires (1) et dont les extrémités (4) s'accouplent à un autre jeu de leviers en 'X' équivalent au précédent et aux unités respectives (1) situées à l'avant et à l'arrière de celui mentionné précédemment. Les points d'union (4) entre deux jeux en ciseau consécutifs (2-3) forment des cames qui se déplacent longitudinalement dans des fenêtres (6) définies latéralement, de sorte que l'ensemble d'unités (1) lors de leur déplacement télescopique demeurent synchronisées et se déplacent à l'unisson, tant lors de leur déploiement que de leur repliement, grâce à l'union établie entre unités par les jeux successifs de leviers qui les lient.

Les fenêtres (6) dans lesquelles se déplacent les points d'articulation (4) entre deux jeux de leviers (2-3) consécutifs, sont définies par des pièces complémentaires fixées latéralement dans l'unité télescopique (1) correspondante. Chacune de ces fenêtres présente une longueur précalculée qui détermine les positions extrêmes et le déploiement maximum et minimum entre unités télescopiques (1).

Les différentes unités télescopiques (1) présentent à l'intérieur des roulements latéraux (7), montés sur des tôles transversales (8) qui agissent sur les guides de la machine correspondante, permettant un déplacement télescopique à grande vitesse. Ces roulements (7) coïncident dans l'exemple pratique représenté, avec les points d'intersection (6) de chaque ciseau et avec les extrémités (4) de ceux-ci et aussi dans la même zone de chaque unité télescopique (1), de préférence avec la zone la plus à l'avant ou située le plus près de la partie fixe de la machine.

L'unité (11) inamovible, située dans la zone avant, qui cache les unités télescopiques (1) quand elles se replient, présente les jeux de leviers (9) correspondants qui s'articulent en un point antérieur, central (10) et à l'extrémité (4) avec le premier jeu de leviers (2-3), afin de synchroniser de même le déplacement de l'unité télescopique (1) montée à la suite.

## Revendications

1. Dispositif pour la synchronisation du déplacement de différents modules télescopiques, de préférence d'unités de recouvrement (1) d'un organe vital d'une machine en évitant le dépôt de particules ou de liquides sur des pièces pouvant se boucher, caractérisé en ce qu'il comprend une série de leviers (2) et (3) montés en 'X', dont le point de rotation central (5) est fixé sur une des unités télescopiques intermédiaires (1) et dont les extrémités (4) s'accouplent à un autre jeu de leviers en 'X' équivalent au précédent et aux unités respectives (1) situées à l'avant et à l'arrière de celui mentionné précédemment, ces points d'union (4) constituant des cames qui se déplacent longitudinalement le long de fenêtres (6) définies latéralement de sorte que l'ensemble des unités (1) dans leur déplacement télescopique, demeurent synchronisées et se déplacent à l'unisson, tant lors de leur déploiement que de leur repliement, grâce à l'union établie par les jeux successifs de leviers qui les lient.

2. Dispositif, selon la revendication précédente, caractérisé en ce que les fenêtres (6) dans lesquelles se déplacent les points d'articulation (4) entre deux jeux de leviers (2-3) consécutifs, sont définies par des pièces complémentaires fixées latéralement dans l'unité télescopique (1) correspondante et présentent une longueur précalculée qui détermine les positions extrêmes et le déploiement maximum et minimum entre unités télescopiques (1).

3. Dispositif, selon les revendications précédentes, caractérisé en ce que les différentes unités télescopiques (1) présentent à l'intérieur des roulements latéraux (7) qui agissent sur les guides de la machine correspondante, permettant un déplacement télescopique à grande vitesse.

4. Dispositif, selon les revendications précédentes, caractérisé en ce que l'unité (11) inamovile qui cache les unités télescopiques (1) quand elles se déplient, présente deux jeux de leviers (9) qui s'articulent en un point central (10) et à l'extrémité (4) avec le premier jeu de leviers (2-3) afin de synchroniser de même le déplacement de la deuxième unité télescopique (1).
